# EUROPEAN PATENT APPLICATION

(11) **EP 1 353 129 A1**
(43) Date of publication of application: **15.10.2003**
(21) Application number: 03252250.0
(22) Date of filing: 09.04.2003
(51) Int. Cl.: F24D 3/16

(54) **Overfloor heating system**

(30) Priority: 10.04.2002 GB 0208282
(71) Applicant: Polypipe Building Products Ltd., Edlington, Doncaster DN12 1ES (GB)
(72) Inventor: Raynor, David, Sheffield, S35 0FD (GB); Beever, Andrew, Huddersfield HD4 6XN (GB)
(74) Representative: Evans, Claire

(57) **Abstract**

An overfloor heating system, comprising one or more conduits for conduction of a heating medium, and a plurality of support elements for supporting said conduits *in situ* over an existing floor or wall.

## Description

This application relates to a heating system, and in particular to an overfloor heating system for application to an existing floor or wall surface.

Underfloor heating systems have long been known as an alternative to traditional radiator type heating systems. Generally speaking they consist of heating elements such as pipes or even spaces disposed under a floor into which a heating medium is circulated. In the prior art, various systems have been proposed to facilitate the provision of underfloor heating, including systems involving modular elements which accommodate the heating medium structures and which are laid underneath or as part of the load bearing structure of the floor. However, the provision of underfloor heating systems in existing buildings with established floorings, and in new buildings in which the flooring may be laid over services such as pipework and electrical cabling remains a problem. For example, conventional systems of underfloor heating require construction heights of a minimum 50mm and if therefore installed to an existing floor, would raise the floor by this level resulting in unacceptable steps between rooms.

It is an object of the present invention to seek to mitigate problems such as these.

According to the invention there is provided an overfloor heating system, comprising one or more conduits for conduction of a heating medium, and a plurality of support elements for supporting said conduits *in situ* over an existing floor or wall.

Thus, the invention provides an overfloor system which can be installed as a retrofit of "underfloor heating" over an existing floor or for first floor suspended floors. The overfloor system can also be installed to an existing wall. The present invention also results in the benefit that heating response times are less than those of conventional systems thus allowing single rooms to be converted to underfloor heating to give an acceptable room temperature within similar times to conventional radiator systems.

Preferably, each support element includes one or more recess for receiving a conduit. This provides a neat and compact structure. Each recess may comprise a groove, channel or bore formed in the support elements.

Each support element may include one or more substantially straight recesses and one or more curved recesses, said recesses being joined together to form a continuous recess.

Preferably, the system comprises a plurality of central support elements and edge support elements, each central support element including one or more substantially straight recesses, and each edge support element including one or more curved recesses. The central support elements and edge support elements may then be fitted together to provide a surface with one continuous recess.

Preferably, each edge support element comprises one or more additional recesses for receiving a connecting pipe for connecting said conduit to a source of said heating medium.

Each said recess for receiving a connecting pipe may be curved, and may connect to either end of a curved recess for receiving said conduit.

Each edge support element may comprise at least one cutting guide to enable the size of the element to be reduced.

Preferably, each recess is formed in the upper surface of the support element.

Each edge support element may comprise a cover for the connecting pipes. Alternatively, the pipes may be covered by a mortar screed.

Each recess may include a rebate where it meets the edge of the support element. This avoids having a sharp cover in proximity to a conduit which could cut into the conduit if adjacent support elements are not exactly aligned.

Preferably, each support element is substantially planar. The lower surface of each support element may be ribbed. This reduces weight and prevents sinking if the support element is moulded or extruded.

The recesses in the support elements may be formed by cutting the recesses out of the support element, in which case the support elements may be formed from, for example, fibreboard, wood floor composite, cellulose reinforced gypsum or gypsum. Any other suitable material may be used.

Alternatively, the recesses in the support elements may be formed by extruding the support elements, in which case the support elements may be formed from a thermoplastic material, or by moulding the support elements in which case the support elements may be formed from a thermoplastic or thermosetting material.

The thermoplastic or thermosetting material may include an additive to increase the thermal conductivity of the material, for example, carbon black or a metallic filler.

The support elements may be laminated.

Preferably, the laminate comprises a base layer and an upper layer. The materials for each layer of the laminate may be selected to improve the properties of the support elements. For example, the base layer may be made from a strong insulating material, and the upper layer may be made from a heat conducting material.

Preferably, the upper layer comprises a plurality of strips, the gaps between the strips forming the recesses in the support element. This avoids the necessity for the step of cutting the recesses out of the support element.

The laminate may comprise a metal middle layer. This metal layer reflects heat upwards, and limits heat loss into the floor or wall.

Each support element may comprise means to enable it to be removably attached to another, *in situ*. The means may comprise one or more lap, or any other suitable means.

Preferably, there is no such means, and the support elements are simply butted together. The support elements may be attached to each other by adhesive and/or staples. Preferably, the support elements are attached to one another, but not to the floor.

Preferably, each support element has a thickness from 10 to 20mm, and a diameter from 6 to 18mm. Preferably, each conduit has a diameter less than 15mm. This ensures that panels are easy to handle and have a limited effect on existing floor heights whilst still providing sound insulation and ensuring that the required heat providing performance is maintained.

According to a second aspect of the invention there is provided a method of providing heating, comprising applying to an existing floor or wall one or more conduits for conduction of a heating medium, and a plurality of support elements for supporting said conduits.

The method may include the step of mounting the conduits in recesses of the support elements and may further include the step of putting the conduits in fluid communication with an existing central heating system of a building.

A membrane may be applied to the floor before the support elements are applied thereto. This provides a vapour barrier for solid (e.g. concrete) floors and prevents the adhesive bonding to a wooden floor which would prevent the overfloor system being a true floating floor.

Means for allowing contraction and expansion of the support elements may be applied where the floor or walls joins another wall or floor.

The invention will further be described by way of example only with reference to the accompanying drawings in which:
Figure 1 is a plan view of a first embodiment of a central support element according to the invention;
Figure 2a is a side elevational view of a part of the support element of Figure 1;
Figure 2b is a side elevational view of a second embodiment of a central support element according to the invention;
Figure 3 is an end elevational view of a third embodiment of a central support element according to the invention;
Figure 4 is an end elevational view of a fourth embodiment of a central support element according to the invention;
Figures 5a and 5b are plan views of fifth and sixth embodiments of central support elements according to the invention;
Figure 5c is a plan view of the support element of Figure 1 misaligned with another support element;
Figure 6 is a plan view of a first embodiment of an edge support element according to the invention;
Figure 7 is a plan view of a system according to the invention including the support element of Fig. 1 and the edge support element of Fig. 6;
Figure 8 is a plan view of a second embodiment of an edge support element according to the invention;
Figure 9a is a side cross-sectional view along line A-A of Figure 8;
Figure 9b is a side cross-sectional view along line B-B of Figure 8;
Figure 10 is a plan view of a system according to the invention including the edge support element of Figure 8; and
Figures 11a to 11d are side cross-sectional views of the edge support element of Figure 8 with different covers for the connecting pipes.

Referring to the drawings there is illustrated an overfloor heating system 1, comprising one or more conduits 2 for conduction of a heating medium (not shown), and a plurality of support elements 3 for supporting said conduits 2 *in situ* on an existing floor or wall.

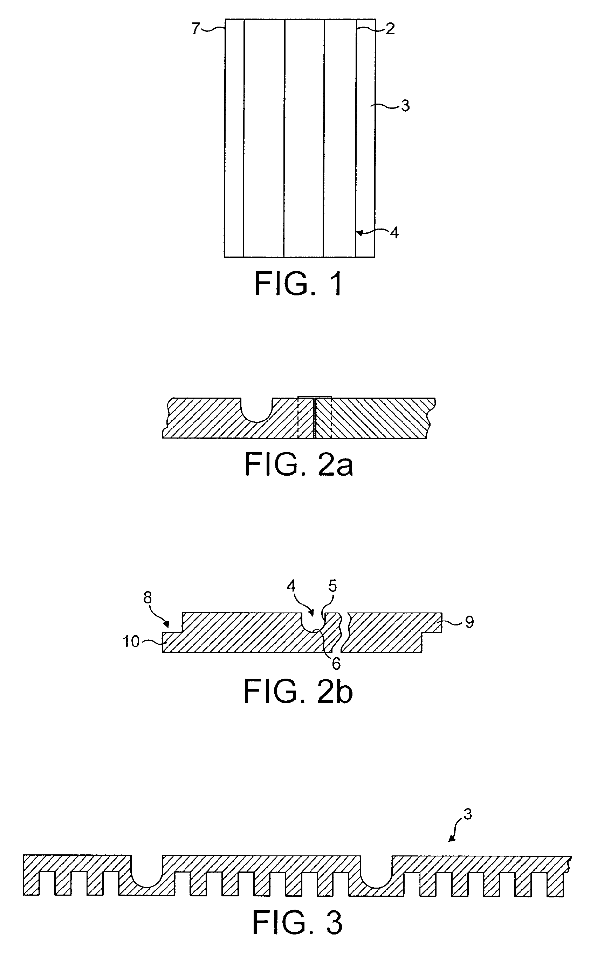

Figure 1 shows a central support element 3 which comprises a panel about 18mm thick, 800mm long and 600mm wide. The panel is formed with a series of four parallel grooves 4 formed in the upper (in use) surface. The grooves 4 have substantially parallel walls 5 and an arcuate bottom surface 6.

In the embodiment shown in Figure 2a, the support elements 3 are simply butted together. An adhesive is applied to the edges of the elements 3 in order to keep them in place. The elements 3 are also riveted together, using staples which do not go through the full thickness of the support elements 3 to allow some relative movement between the floor and the elements 3 in the event of shrinkage or settlement. In the case of a wooden floor, 'U' shaped staples which do go through the support elements 3 could be used as this type of staple would still permit relative movement generated by expansion/contraction or slight movement of the floor.

Alternatively, each long edge 7 of each support element 3 may be formed with a lap 8 which enables each element 3 to cooperate with and to lay level with adjacent elements 3. Each element 3 may have an overlap 9 and an underlap 10 as in the embodiment shown in Figure 2b.

The central support element 3 may be made of any suitable material. For example, it may be made of fibreboard, cellulosed reinforced gypsum, a thermoplastic material or a thermosetting material. If the element 3 is made from fibreboard or cellulose reinforced gypsum, then the grooves 4 may be made by routing or by cutting with a series of saw-blades. Support elements 3 made from a thermoplastic material may be produced by extrusion, and support elements 3 made from a thermoplastic or thermosetting material may be produced by moulding. In both cases, the grooves 4 may be formed as the element 3 is formed, and so there is no need to include a separate step for the formation of these grooves. The thermoplastic or thermosetting material must have suitable heat transfer characteristics, and this can be achieved by including additional additives such as carbon black or metallic fillers to increase the thermal conductivity of the material. Where a thermoplastic or thermosetting material is used, the lower surface of the element 3 may be ribbed as shown in Figure 3 to reduce weight and to prevent sinking.

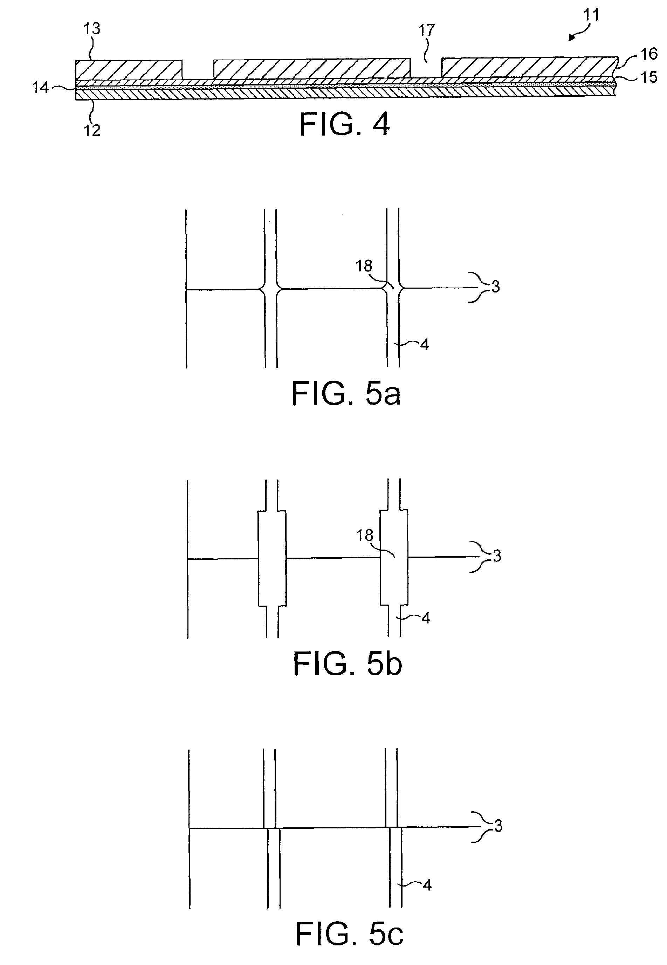

Another possibility is to make the central support elements 3 as a laminate. The support element 11 shown in Figure 4 comprises a base layer 12 and an upper layer 13, which are bonded together by an adhesive layer 14. The base layer 12 is made of plywood, which is stronger than fibreboard, and also has better insulating properties to limit losses into the floor. The upper layer 13 is made of a thin layer 15 of plywood having a number of strips 16 of fibreboard bonded thereto with a gap 17 of about 12 mm between each strip 16 to form a groove for the pipes. The thin layer 15 of plywood is about 5 mm thick, and the strips 16 of fibreboard are about 12 mm thick. A layer of metal foil (not shown) may also be included between the base layer 12 and the upper layer 13 to reflect the heat upwards and limit heat loss into the floor.

The grooves 4 and 17 may include a rebate 18 as shown in Figs. 5a and 5b to avoid having an exposed sharp corner which could cut into a pipe if adjacent support elements 3, 11 are not exactly aligned as shown in Figure 5c.

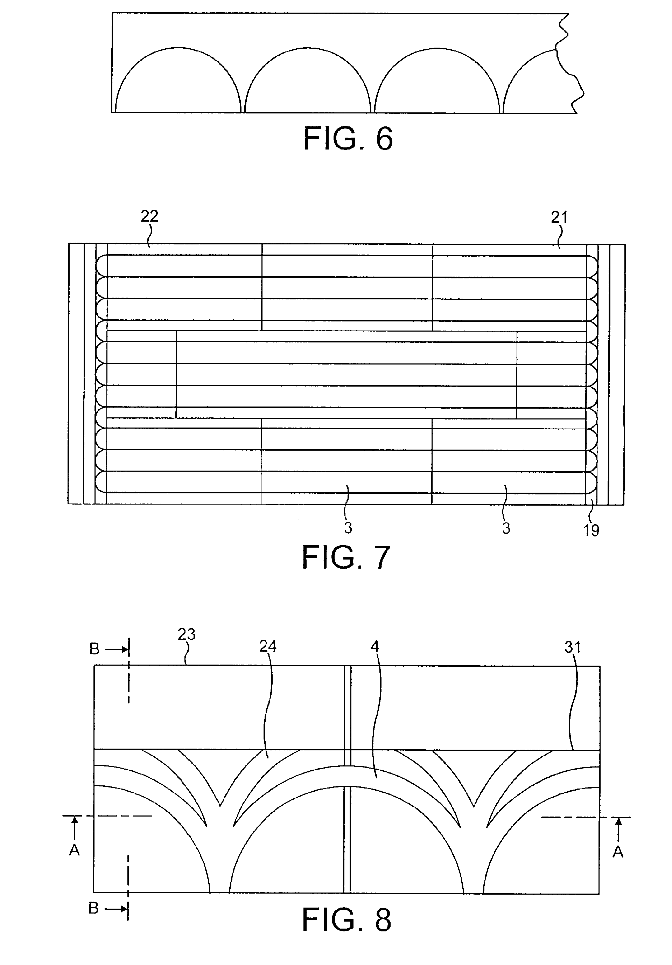

Figure 6 shows an edge support element 19. The edge element 19 consists of a panel which is similar in construction to support elements 3, 11 except that it has curved grooves 20 positioned to coincide with the grooves 4 of the central support elements 3, 11 placed thereagainst thereby acting to connect adjacent grooves 4 together. Thus, one continuous groove 21 is formed as shown in Fig. 7, which shows an overfloor system 1 according to the invention, which includes the edge support element 19 of Figure 6, in place on an existing floor. In the embodiment shown in Figure 7, the joints between the support elements 3 are staggered. They may also be aligned.

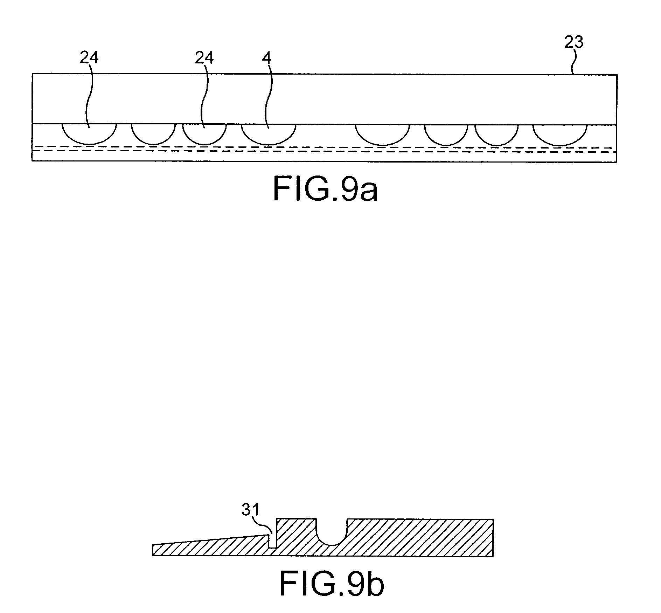

Figures 8, 9a and 9b show a second embodiment of an edge support element 23. This edge element 23 comprises additional grooves 24 for connecting pipes 25 to connect the conduit 22 to a number of feed pipes 26 which are connected to a feed of heating medium. The edge support element 23 includes a number of cutting lines 31 which have reduced thickness and act as guides to enable the element 23 to be cut in half to aid fitting in part widths, or to enable part of the element 23 to be removed if connecting pipes 25 are not required. For example, if the connections into the overfloor system are positioned on one side of the floor, then no connecting pipes 25 would be required on the other side of the system.

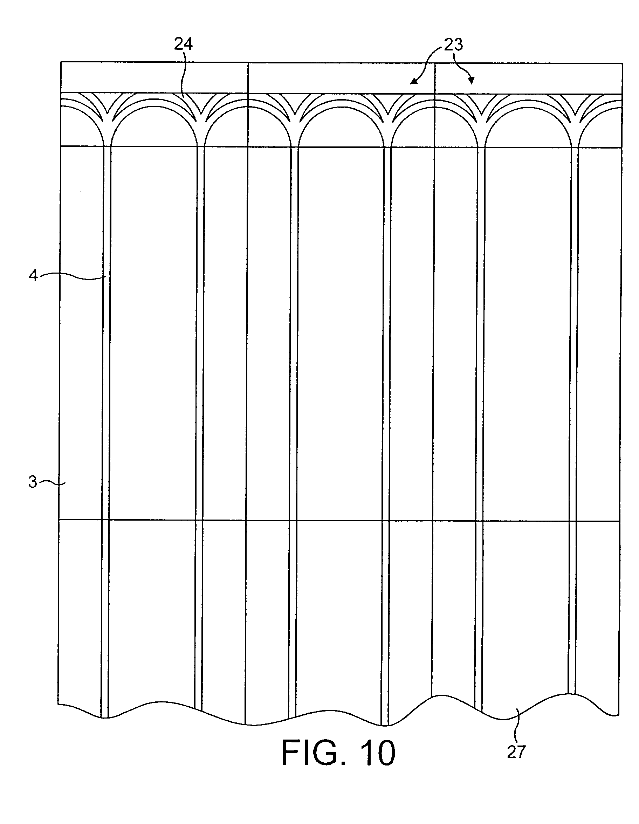

Figure 10 shows a system 27 according to the invention, which includes the edge support element 23 of Figures 8 and 9, in place on an existing floor.

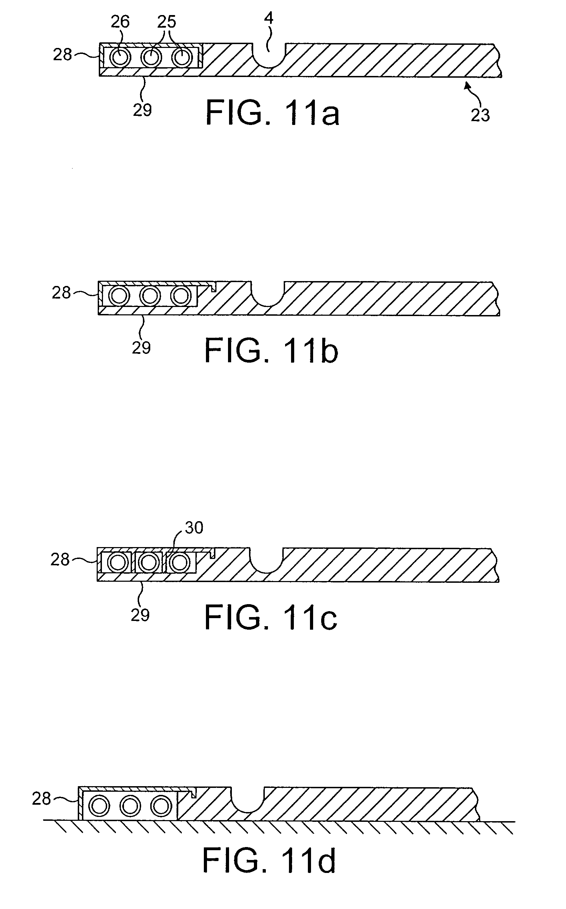

Figures 11a to d show a number of different covers 28 for the connecting pipes 25 and feed pipes 26. In the embodiment shown in Figures 11a to c, the edge element 23 includes a section 29 of reduced thickness to accommodate the pipes 25, 26. In the embodiment of Figure 11d, the section 29 has been omitted so that the pipes 25, 26 rest on the floor. The embodiment shown in Figure 11c includes additional webs 30 to give better load distribution.

As an alternative to the covers 28, the pipes 25, 26 may be filled in with a mortar screed to a level flush with the upper surface of the elements 23. Pipe clips with a self adhesive backing can be fixed to the reduced thickness section 29 of the edge element 23 or the floor to hold the pipes 25, 26 in position until the cover 28 or mortar screed is applied to cover the pipes.

The edge elements 23 may be made from any suitable material. For example, they may be made from an extruded thermoplastic material, cellulose reinforced gypsum or a moulded thermoplastic or thermosetting material. They may be formed with a hollow core to reduce weight and prevent sinking. The covers 28 may also be made from any suitable material. For example, they may be made from extruded aluminium thermoplastics.

In use, the central support elements 3, 11 and edge support elements 19, 23 are laid on a floor. The preferred method is to produce a floating floor such that the support elements are laid over a flexible vapour barrier (eg polyethylene film) and bonded and stapled to each other rather than into the floor below. Flexible foam strip is then used between the wall of the room and the edges of the support elements to accommodate thermal expansion/contraction and to take up irregularities along the wall. A desired run of conduit 2 is inserted into the grooves 4 in for example 50 m lengths to form a continuous run. In the present embodiment, 12mm diameter thermoplastic pipe is used. The conduits 2 can then be connected up to a feed of heating medium such as an existing central heating system of a dwelling. A control mechanism can be provided including an arrangement of valves and a thermostat (not shown) which can be used to control the temperature of the room so that a separate control to the main system is achievable. Any type of decorative flooring can be laid on the overfloor system, such as carpet or tiles. If carpet is to be laid on the system, then a thin (e.g. 3mm) layer of plywood may be laid first to ensure that there is sufficient support over the grooves.

It has been found that with the present invention heating response times are less than those of conventional underfloor systems, being more comparable to radiator systems. In new buildings which tend to be well insulated a panel thickness of 15mm is suitable with a pipe diameter of 10mm. Where a greater degree of heating is required such as in an older building it has been found that a panel thickness of 18mm and a pipe diameter of 12mm is suitable. Where the panels are to be applied to a wall, a panel thickness of 10mm is suitable with a pipe diameter of 6mm.

## Claims

1. An overfloor heating system, comprising one or more conduits for conduction of a heating medium, and a plurality of support elements for supporting said conduits *in situ* over an existing floor or wall.

2. A system according to Claim 1, wherein each support element includes one or more recess for receiving a conduit.

3. A system according to Claim 2, wherein each support element includes one or more substantially straight recesses and one or more curved recesses, said recesses being joined together to form a continuous recess.

4. A system according to Claim 2, comprising a plurality of central support elements and a plurality of edge support elements.

5. A system according to Claim 4, wherein each central support element includes one or more substantially straight recesses.

6. A system according to Claim 4 or Claim 5, wherein each edge support element includes one or more curved recesses.

7. A system according to Claim 6, wherein each edge support element comprises one or more additional recesses for receiving a connecting pipe for connecting said conduit to a source of said heating medium.

8. A system according to Claim 7, wherein each recess for receiving a connecting pipe is curved, and connects to either end of a curved recess for receiving said conduit.

9. A system according to any of Claims 6 to 8, wherein each edge support element comprises at least one cutting guide to enable the size of the element to be reduced.

10. A system according to any of Claims 2 to 9, wherein each recess is formed in the upper surface of the support element.

11. A system according to Claim 10 when dependent on any of Claims 7 to 9, wherein each edge support element comprises a cover for the connecting pipe.

12. A system according to any of Claims 2 to 11, wherein each recess includes a rebate where it meets the edge of the support element.

13. A system according to any preceding claim, wherein each support element is substantially planar.

14. A system according to any preceding claim, wherein the lower surface of each support element is ribbed.

15. A system according to any preceding claim, wherein the recesses in the support elements are formed by cutting the recesses out of the support element.

16. A system according to Claim 15, wherein the support elements are formed from fibreboard, wood floor composite, cellulose reinforced gypsum or gypsum.

17. A system according to any of Claims 1 to 14, wherein the recesses in the support elements are formed by extruding the support elements.

18. A system according to Claim 17, wherein the support elements are formed from a thermoplastic material.

19. A system according to any of Claims 1 to 14, wherein the recesses in the support elements are formed by moulding the support elements.

20. A system according to Claim 19, wherein the support elements are formed from a thermosetting or thermoplastic material.

21. A system according to Claim 17 or 19, wherein the material includes an additive to increase the thermal conductivity of the material.

22. A system according to any preceding claim, wherein the support elements are laminated.

23. A system according to Claim 22, wherein the laminate comprises a base layer and an upper layer.

24. A system according to Claim 23, wherein the base layer is made from a strong insulating material.

25. A system according to Claim 23 or Claim 24, wherein the upper layer is made from a heat conducting material.

26. A system according to any of Claims 23 to 25, wherein the upper layer comprises a plurality of strips, the gaps between the strips forming the recesses in the support elements.

27. A system according to any of Claims 23 to 26, wherein the laminate comprises a metal middle layer.

28. A system according to any of Claims 1 to 27, wherein the support elements are attached to each other by an adhesive.

29. A system according to any of Claims 1 to 28, wherein the support elements are attached to each other by staples.

30. A system according to any of Claims 1 to 27, wherein each support element comprises means to enable it to be removably attached to another, *in situ*.

31. A system according to Claim 30, the means comprising one or more lap.

32. A system according to any preceding claim, wherein the support elements are attached to one another, but not to the floor.

33. A system according to any preceding claim, each support element having a thickness from 10 to 20mm.

34. A system according to Claim 33, each conduit having a diameter from 6 to 18mm, preferably less than 15mm.

35. A support element for use in an overfloor heating system, the support element being as specified in any of Claims 1 to 34.

36. A method of providing heating, comprising applying to an existing floor or wall one or more conduits for conduction of a heating medium, and a plurality of support elements for supporting said conduits.

37. A method according to Claim 36, including the step of mounting the conduits in recesses of the support elements.

38. A method according to Claim 36 or Claim 37, including the step of putting the conduits in fluid communication with an existing central heating system of a building.

39. A method according to any of Claims 36 to 38, wherein a membrane is applied to the floor before the support elements are applied thereto.

40. A method according to any of Claims 36 to 39, wherein means for allowing contraction and expansion of the support elements is applied where the floor or wall joins another wall or floor.

41. A method according to any of claims 36 to 40, wherein the support elements are as specified in any of Claims 1 to 35.
